# EUROPEAN PATENT SPECIFICATION

(11) **EP 3 130 802 B1**
(45) Date of publication and mention of the grant of the patent: **25.09.2019**
(21) Application number: 15180483.8
(22) Date of filing: 11.08.2015
(51) Int. Cl.: F16C 35/067, F16C 35/04, F03D 80/70

(54) **REINFORCED MAIN BEARING OF A WIND TURBINE**
VERSTÄRKTE HAUPTLAGERUNG EINER WINDTURBINE
PALIER PRINCIPAL RENFORCÉ POUR UNE ÉOLIENNE

(43) Date of publication of application: 15.02.2017
(73) Proprietor: Siemens Gamesa Renewable Energy A/S, 7330 Brande (DK)
(72) Inventor: Laursen, Christian, 8722 Hedensted (DK)
(74) Representative: Aspacher, Karl-Georg

(56) References cited:
- EP-A1- 1 925 820
- EP-A1- 2 014 917
- WO-A1-2007/095953
- DE-A1- 10 351 524
- US-A1- 2004 108 733

## Description

The present invention relates to a main bearing of a wind turbine. In particular, the invention relates to the main bearing of a wind turbine which comprises a reinforcement element in order to reduce torsional deformation of the main bearing. Furthermore, the invention relates to a wind turbine comprising such a main bearing.

The main bearing of a wind turbine is typically subject to considerable deformation during operation of the wind turbine. This is particularly valid for conventional wind turbines with one single main bearing connecting rotatably the hub of the wind turbine with the generator rotor of the wind turbine. These deformations of the main bearing are unfavorable for the life time of the bearing due to wear, for instance.

A first example of a main bearing of a wind turbine is given in the German patent application DE 103 51 524 A1. A second example of a main bearing of a wind turbine is given in the European patent application EP 2 014 917 A1.

The deformations that the main bearing experiences can be of radial, axial and torsional nature. In this context, the terms "radial", "axial" and "torsional" relate to the rotational axis of the rotor, in other words to the rotational axis of the main bearing.

Conventionally, stiffener rings are applied to the main bearing. These stiffener rings are applied in particular to one or both sides of the main bearing in order to reinforce the main bearing and to better withstand the loads which are acting on it. Such stiffener rings are particularly efficient with regard to radial deformations of the main bearing. However, this type of classical reinforcement is neither cost nor mass effective with respect to torsional deformation of the main bearing.

It is thus the objective of the present invention to provide a concept of efficiently addressing the torsional deformation of the main bearing and propose a cost and mass effective solution to reduce torsional deformation of the main bearing.

This objective is solved by the independent claim. Advantageous modifications and amendments are described in the dependant claims.

The torsional deformation is also known as warping or rotation of the main bearing, in particular the rings of the main bearing.

By introducing a reinforcement element with a cavity, torsional stiffness is introduced which in turn effectively reduces the torsional deformations of the main bearing. In structural mechanics, it is known that torsional stiffness is ideally achieved with an element comprising a thin walled circular section. One of the least effective sections for torsional stiffness is a flat plate section. This is however the classical reinforcement means for bearings as the commonly used stiffener rings exactly represent such flat plates.

It has been recognized by the inventor that this concept of an element comprising a cavity is advantageously used and applied to the main bearing of a wind turbine; and that application of this concept and transfer of this concept to main bearings of wind turbines efficiently reduces torsional deformations of the main bearing.

Advantageously the reinforcement element is centered around the main bearing and thus the cavity represents a toroidal shape.

Thus, in particular, for a main bearing comprising an outer ring and an inner ring, wherein both rings are arranged coaxially with regard to each other, the reinforcement element reduces the torsional deformation of the outer ring and/or the inner ring.

In other words, the reinforcement element is particularly beneficial for reducing the deformation of the bearing rings, at least reducing the deformation of one of the bearing rings.

The coaxial arrangement of the inner ring and the outer ring can also be described by a coaxial arrangement about a common axis of symmetry.

Regarding the cross section of the cavity as viewed in a cross-sectional view encompassing the common axis of symmetry of the outer ring and the inner ring, a first advantageous alternative is a circular cross section.

This has the advantage that according to structural mechanics a circular cross section has the potential of a maximum torsional stiffness.

In a second alternative, the cross section of the cavity is at least substantially rectangular. This has the advantage that on the one hand it still allows for a good torsional stiffness and on the other hand the manufacturing of a reinforcement element with a cavity comprising a rectangular cross section is facilitated. In other words, a rectangular cross section represents a good compromise between torsional efficiency and inexpensive manufacturing.

The invention is directed towards a wind turbine for generating electricity comprising a reinforced main bearing as described above.

The wind turbine comprises a generator rotor which is at least partly surrounded by a rotor housing and a hub.
The generator rotor and the hub are rotatably connected via a main bearing, and the main bearing is reinforced by a reinforcement element. The reinforcement element comprises a cavity to reduce torsional deformation of the main bearing.

Advantageously, the reinforcement element is connected to the rotor housing of the wind turbine.

The rotor housing is a typical element of the wind turbine which surrounds at least partly the generator rotor of the wind turbine. The generator rotor is the rotating part of the generator. Thus, the rotor housing is rotating as well with regard to the stationary components of the wind turbine such as the nacelle or the tower.

The rotor housing is located in close proximity to the stator shaft which is stationary with regard to the nacelle of the wind turbine. In direct-drive wind turbines the generator rotor is directly connected or even built as one single piece to the rotor and the hub at which the rotor blades are mounted. In geared wind turbines the gear drive is arranged between the generator rotor and the rotor at the hub of the wind turbine where the rotor blades are mounted. In any case, the generator rotor is surrounded at least partly by the rotor housing.

Assuming that the outer ring is the rotating bearing component with regard to the nacelle, one beneficial way to arrange the reinforcement element is to place the reinforcement element radially more outwards from the rotor axis of rotation and connect it with the rotor housing. This has the beneficial effect that not only the torsional stiffness of the main bearing is enhanced but also the air gap between the generator rotor and the stationary stator shaft is stabilized.

In other words, it is ensured that the rotor housing and the generator rotor is stabilized against torsional deformation as well. As a consequence of the stabilized air gap of the generator, the air gap as such can be decreased which potentially gives more power to the generator. This advantage particularly applies to direct drive wind turbines.

The reinforcement element comprises a first side which is partly limiting the cavity, and the first side is formed by a part of the rotor housing.

In other words, the reinforcement element is directly connected to the rotor housing and is even using as one of the walls of the reinforcement element a part of the rotor housing as such.

This has the advantage of avoiding an extra wall of the reinforcement element and to directly increase the stiffness of the rotor housing.

A second side of the reinforcement element, which is partly limiting the cavity, is formed by a part of the outer ring of the main bearing.

This has the advantage that the reinforcement element uses as a second wall of the cavity the outer surface of the outer ring. Thus, again, material is saved and the torsional stiffness of the main bearing and the rotor housing is directly improved.

A third side of the reinforcement element, which is partly limiting the cavity, is formed by a so-called "connection element".

This connection element is also referred to as a "connector ring". Assuming that the outer ring has an annular shape, which is typical for the outer ring of a main bearing of a wind turbine, the reinforcement element is advantageously placed in direct contact to the outer ring. A simple and efficient means to obtain the reinforcement element with the cavity is to add the connection element to the outer ring and the rotor housing.

Thus, with simple and lightweight means, the reinforcement element with the cavity is achieved.

With regard to a fourth side of the reinforcement element, this may also be realized by the connection element or it may be realized by the rotor housing. In particular, a suitable recess might be added or might already be present at the rotor housing, thus only the connection element has to be added in order to obtain a cavity which is substantially closed and which considerably increases the torsional stiffness of the main bearing.

The connection element may be embedded or screwed to the rotor housing. The connection element is a panel, i.e. a plate with an annular shape.

In the following an advantageous embodiment of the present invention is given. This represents one practical realization. It is not limiting; similar concepts may also lead to satisfying results for reducing the torsional deformations of the main bearing.

The drawings show in
- Figure 1: a wind turbine; and in
- Figure 2: a first embodiment of a reinforced main bearing of a wind turbine.

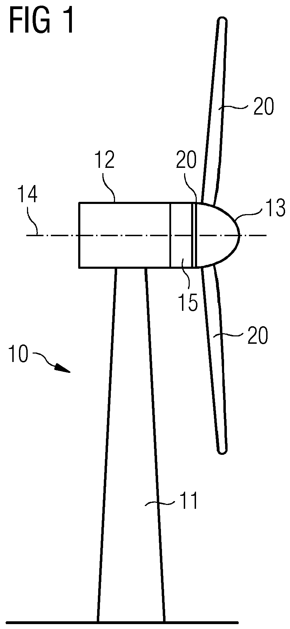

In Figure 1, a wind turbine 10 is shown. The wind turbine 10 comprises a nacelle 12 and a tower 11. The nacelle 12 is mounted at the top of the tower 11. The nacelle 12 is mounted rotatable with regard to the tower 11 by means of a yaw bearing. The axis of rotation of the nacelle 12 with regard to the tower 11 is referred to as the yaw axis.

The wind turbine 10 also comprises a hub 13 with three rotor blades (of which two rotor blades 16 are depicted in Figure 1). The hub 13 is mounted rotatable with regard to the nacelle 12 by means of a main bearing 20. The hub 13 is mounted rotatable about a rotor axis of rotation 14.

The wind turbine 10 furthermore comprises a generator rotor, which connects the hub 13 with the generator 15. The hub 13 is connected directly to the generator 15, thus the wind turbine 10 is referred to as a gearless, direct-driven wind turbine. As an alternative, the hub 13 may also be connected to the generator 15 via a gear box. This type of wind turbine is referred to as a geared wind turbine.

The generator 15 is accommodated within the nacelle 12. A generator 15 is arranged and prepared for converting the rotational energy from the hub into electrical energy.

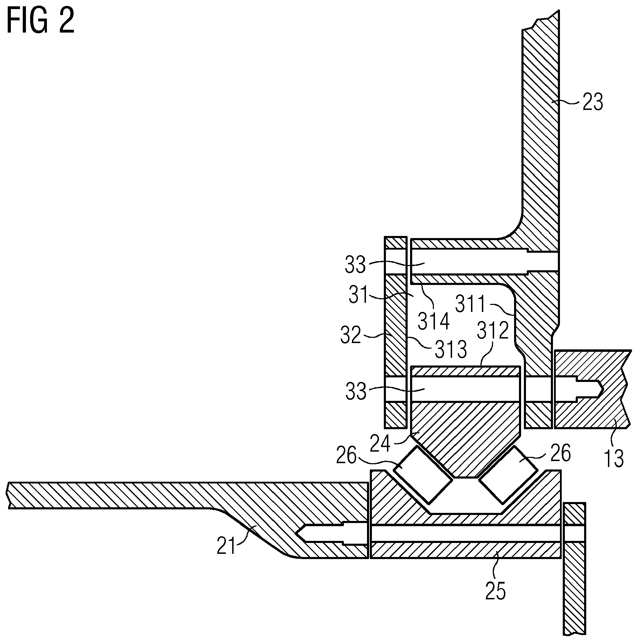

Figure 2 shows a cross sectional view through a part of the wind turbine. In particular, it shows the stator shaft 21 which is a part of the generator and which is stationary with regard to the nacelle. The inner ring 25 of the main bearing is rigidly connected with the stator shaft. Thus, the inner ring 25 is also stationary with regard to the nacelle. The second bearing component of the main bearing is the outer ring 24.

The outer ring 24 is separated from the inner ring 25 by a gap in which rolling elements 26 are located. These rolling elements may for example be balls or cylinders or the like. For the main bearings of wind turbines, tapered roller bearings are often used. The outer ring 24 is rotatable with regard to the nacelle in the inner ring 25. The hub 13 of the wind turbine is fixedly and rigidly connected to the outer ring 24 of the main bearing. The rotor blades are attached to the hub 13 (not shown).

The rotor housing 23 is attached and connected to the outer ring 24 and protects the rotating parts of the main bearing and of the generator. The components described so far are well-known and conventional components of main bearings of wind turbines.

In order to increase the stiffness of the main bearing and consequently reduce deformations of the main bearing stiffener rings, which for example are applied radially more outwards than the outer ring 25 or which are applied at the front surface or rear surface of the outer ring, are conventionally applied in order to increase the stiffness of the main bearing. But these conventional stiffener rings are on the one hand mass and cost effective and on the other hand they do not efficiently reduce the torsional stiffness of the main bearing.

The present invention teaches to add a hollow box or chamber to the main bearing in order to increase its torsional stiffness. In the present embodiment, this is realized by adding an annular, flat connection element 32 radially outwards of the outer ring 24. This connection element 32, which is also referred to as a connector ring, is screwed by a pair of screws 33 to the outer ring 24 and to a recess of the rotor housing 23. As a result, a hollow chamber, in other words a cavity, is received and obtained.

This cavity 31 has four sides: a first side 311 which is formed by the rotor housing 23; a second side 312 which is formed by the outer surface of the outer ring 24; a third side 313 which is formed by the connection element 33 and a fourth side 314 which is formed by the rotor housing 23, in particular by the recess of the rotor housing 23.

As a result, by simple and lightweight means, a reinforcement element with a cross section which effectively reinforces the structure against not only radial deformations but also against harmful torsional deformations is obtained.

Note that as an additional advantage of the reinforcement element with the cavity which is attached to the rotor housing 23 of the generator, an increased stiffness of the rotor housing 23 is also obtained. This in turn ensures a more stable air gap between the generator rotor and the stator of the direct-driven generator. Thus the air gap is stabilized and may as a consequence be decreased. This in turn has the potential of increasing the power which can be generated by the generator.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Wind turbine (10) for generating electricity
wherein
- the wind turbine (10) comprises a generator rotor (22) which is at least partly surrounded by a rotor housing (23),
- the wind turbine (10) comprises a hub (13),
- the generator rotor (22) and the hub (13) are rotatably connected via a main bearing (20),
- the main bearing (20) is reinforced by a reinforcement element (30),
- the reinforcement element (30) comprises a cavity (31) to reduce torsional deformation of the main bearing (20),
- the reinforcement element (30) comprises a first side (311) which is partly limiting the cavity (31),
- the first side (311) is formed by a part of the rotor housing (23),
- the reinforcement element (30) comprises a second side (312) which is partly limiting the cavity (31),
- the second side (312) is formed by a part of the outer ring (24),
- the reinforcement element (30) comprises a third side (313) which is partly limiting the cavity (31),
- the third side (313) is formed by a connection element (32), and
- the connection element (32) is a panel with an annular shape.

2. Wind turbine (10) according to claim 1,
wherein the reinforcement element (30) is connected to the rotor housing (23).

3. Wind turbine (10) according to one of the preceding claims,
wherein the connection element (32) is attached, in particular bolted or screwed, to the rotor housing (23) and the outer ring (24).

## Patentansprüche

1. Windenergieanlage (10) zum Erzeugen von Strom, wobei
- die Windenergieanlage (10) einen Generatorrotor (22) umfasst, der zumindest teilweise von einem Rotorgehäuse (23) umgeben ist,
- die Windenergieanlage (10) eine Nabe (13) umfasst,
- der Generatorrotor (22) und die Nabe (13) über ein Hauptlager (20) drehbar verbunden sind,
- das Hauptlager (20) mit einem Verstärkungselement (30) verstärkt ist,
- das Verstärkungselement (30) zum Reduzieren der Torsionsverformung des Hauptlagers (20) einen Hohlraum (31) umfasst,
- das Verstärkungselement (30) eine erste Seite (311) umfasst, die den Hohlraum (31) teilweise begrenzt,
- die erste Seite (311) von einem Teil des Rotorgehäuses (32) gebildet wird,
- das Verstärkungselement (30) eine zweite Seite (312) umfasst, die den Hohlraum (31) teilweise begrenzt,
- die zweite Seite (312) von einem Teil des Außenrings (24) gebildet wird,
- das Verstärkungselement (30) eine dritte Seite (313) umfasst, die den Hohlraum (31) teilweise begrenzt,
- die dritte Seite (313) von einem Verbindungselement (32) gebildet wird und
- es sich bei dem Verbindungselement (32) um eine Platte mit einer Ringform handelt.

2. Windenergieanlage (10) nach Anspruch 1,
wobei das Verstärkungselement (30) mit dem Rotorgehäuse (23) verbunden ist.

3. Windenergieanlage (10) nach einem der vorhergehenden Ansprüche,
wobei das Verbindungselement (32) an dem Rotorgehäuse (23) und dem Außenring (24) angebracht, insbesondere mit Bolzen oder Schrauben daran befestigt ist.

## Revendications

1. Éolienne (10) pour générer de l'électricité
dans laquelle
- l'éolienne (10) comprend un rotor de générateur (22) qui est au moins partiellement enveloppé par un carter de rotor (23),
- l'éolienne (10) comprend un moyeu (13),
- le rotor de générateur (22) et le moyeu (13) sont reliés de manière rotative via un palier principal (20),
- le palier principal (20) est renforcé par un élément de renfort (30),
- l'élément de renfort (30) comprend une cavité (31) pour réduire la déformation en torsion du palier principal (20),
- l'élément de renfort (30) comprend un premier côté (311) qui délimite partiellement la cavité (31),
- le premier côté (311) est formé par une partie du carter de rotor (23),
- l'élément de renfort (30) comprend un deuxième côté (312) qui délimite partiellement la cavité (31),
- le deuxième côté (312) est formé par une partie de la bague externe (24),
- l'élément de renfort (30) comprend un troisième côté (313) qui délimite partiellement la cavité (31),
- le troisième côté (313) est formé par un élément de liaison (32), et
- l'élément de liaison (32) est un panneau ayant une forme annulaire.

2. Éolienne (10) selon la revendication 1,
dans laquelle l'élément de renfort (30) est relié au carter de rotor (23).

3. Éolienne (10) selon l'une des revendications précédentes,
dans lequel l'élément de liaison (32) est fixé, en particulier boulonné ou vissé, au carter de rotor (23) et à la bague externe (24).
